# EUROPEAN PATENT SPECIFICATION

(11) **EP 2 015 558 B1**
(45) Date of publication and mention of the grant of the patent: **02.05.2012**
(21) Application number: 08158580.4
(22) Date of filing: 19.06.2008
(51) Int. Cl.: H04N 1/195

(54) **Method and device for automaticaly digitizing X-ray photographs**
Verfahren und Vorrichtung zur automatischen Digitalisierung von Röntgenaufnahmen
Procédé et dispositif pour la numérisation automatique de photographies par rayons X

(30) Priority: 19.06.2007 BE 200700305
(43) Date of publication of application: 14.01.2009
(73) Proprietor: Erasmushogeschool Brussel, 1070 Brussel (BE)
(72) Inventor: Van Steendam, Albert, 9260 Wichelen (BE); D'Hollander, Erik, 9810 Eke (BE)
(74) Representative: pronovem

(56) References cited:
- EP-A- 0 123 053
- WO-A-92/14403
- WO-A-2005/053534
- WO-A-2005/086469
- DE-C1- 4 133 718
- NL-A- 7 112 124
- US-A- 5 218 463
- US-A- 5 828 469
- US-A- 5 995 138
- US-A1- 2007 018 125

## Description

### Field of the invention

This invention relates to a method and a custom device for automatically digitizing X ray photographs.

### State of the art

In the current state of the art, X-ray photographs are scanned manually, which is a time-consuming activity. In DE 4133718 a device is described where an analog X-ray photograph is scanned and which may be processed by a computer.

US 5828469 discloses a vertical contact scanning device, wherein a document is fed, using gravity, between a pair of two-dimensional sensor arrays when they are spaced apart. A registration stop is positioned under the vertical imaging assembly to align one edge of the document with the sensor arrays. Thereafter, the sensor arrays are brought in contact with the document and an electronic representation of the document is registered.

US 5218463 discloses an X-ray scanner, wherein the X-ray film is fed by means of gravity to a pair of feed rollers, immediately above which are provided apertures on either sides of the film for illuminating and recording the film. An entrance chute is provided, which is inclined at a slight angle to the vertical. The entrance chute receives the film and feeds it downwardly by gravity to the feed rollers. The chute is curved at the bottom end to align the film with the vertical before proceeding through the feed rollers. The chute is provided with a pair of transversely slidable guides that can be adjusted to the width of the film.

### Aims of the invention

The invention aims in particular at digitizing stacked photographs individually in an automated way, thereby obviating drawbacks of devices and methods of the current state of the art.

The present invention aims at providing a solution to the digitization of the existing archive of X-ray photographs and in particular to tackle the time-consuming activity of the manual scan process.

The invention hence also aims at individually digitizing stacked photographs without manual intervention. The risk of incorrect manipulation and placing is reduced with this invention. This automated device allows a faster processing of X-ray photographs.

An additional advantage of the invention is the modular construction of the device, which provides the benefit that different components may be replaced or assembled in a simple fashion.

### Summary of the invention

The present invention relates to a method and device for carrying out the method, as set out in the appended claims, for the automatic digitization of X-ray photographs. With digitization is meant primarily the scanning, but it does not exclude other techniques whereby an analogue physical carrier is processed in an electronic manner. The terms scanning and digitizing are then also used interchangeably in what follows.

Methods and devices according to the invention allow for a complete automatic digitization of a stack of X-ray photographs. Hence advantageously no manual intervention is required in any of the intermediate steps between an untreated stack (i.e. still to be digitized) and a treated stack (i.e. already digitized) of such photographs. The starting point in digitizing according to the invention is therefore a stack of X-ray photographs. In other words, a stack of untreated X-ray photographs is converted to a stack of treated X-ray photographs.

The invention is mainly directed at digitizing X-ray photographs, but it is obviously not excluded that any carrier or sheet can be used. The terms X-ray photograph or photograph are therefore used in that context in what follows. The term "photograph" refers in the following text, amongst others, to an X-ray photograph.

Methods and devices according to the invention are advantageously provided for digitizing large format X-ray photographs, such as photographs of size DIN A5 or larger, more preferably photographs of size DIN A4 or larger.

According to a first aspect of the invention, there is provided a method for the automatic digitization of X-ray photographs according to claim 1, which comprises the following steps: picking an individual X-ray photograph from an untreated stack, positioning the X-ray photograph on a scanning device, digitizing the X-ray photograph and placing the X-ray photograph in a treated stack, wherein (the influence of) gravity is used in the step of positioning the X-ray photograph on the scanning device.

Preferably, gravity is used in the process of collecting an individual X-ray photograph from the untreated stack. Preferably, gravity is used in the step of placing the X-ray photograph in the treated stack.

In positioning the X-ray photograph on the scanning device, the X-ray photograph slides on a plane that has a slope of at least 10° with reference to a plane perpendicular to the line of gravity and the X-ray photograph is positioned so that one corner of the X-ray photograph, measured along the line of gravity, is located lower than the other three corners. Said plane is not parallel to the line of gravity.

Preferably, in positioning the X-ray photograph on the scanning device, air is blown under the X-ray photograph. Preferably, air is blown over said plane.

Preferably, the X-ray photograph in the treated stack assumes the same position as the original position of the X-ray photograph in the untreated stack.

Preferably, in picking the X-ray photograph from the untreated stack, the uppermost X-ray photograph is always picked up from the untreated stack. Preferably, placing the X-ray photograph in the treated stack comprises reversing the X-ray photograph.

Preferably, the positioning of the X-ray photograph on the scanning device is achieved by a linear displacement, having a slope of at least 10° with reference to a plane perpendicular to the line of gravity. Preferably, the slope is less than 90°, more preferably smaller than or equal to 65°.

Preferably, X-ray photographs of different patients in the untreated stack are separated by a separating sheet. In a further advantageous embodiment the step of picking an individual X-ray photograph from the untreated stack comprises identifying the separating sheet. In a likewise further advantageous embodiment the step of positioning the X-ray photographs on a scanning device comprises automatically feeding the separating page.

According to a second aspect of the invention, there is provided a device for automatically digitizing X-ray photographs according to claim 5, comprising a loading unit, a scanning device and a receiving unit. The scanning device comprises a plane for positioning of an X-ray photograph which is placed inclined at an angle of at least 10° with reference to a plane perpendicular to the line of gravity. Said plane is not parallel with the line of gravity. The scanning device comprises two abutment (5x) guides for two edges of the X-ray photograph, which run from a common corner wherein both abutment guides are arranged inclined with reference to a plane perpendicular to the line of gravity (i.e. none of the abutment (5x) guides lies in that perpendicular plane). The abutment (5x) guides are preferably not parallel with the line of gravity.

The abutment (5x) guides are oriented such that the corner of the photograph enclosed by the abutment (5x) guides is located lower than the three other corners when measured along the line of gravity.

Preferably the device for the automatic digitization of X-ray photographs further comprises a device for blowing air over said plane.

Preferably, the loading unit and/or the receiving unit are arranged inclined at an angle of at least 10° and preferably less than 90° with reference to a plane perpendicular to the line of gravity. More preferably, the locating unit and/or receiving unit are arranged inclined at an angle of at least 20° with reference to a plane perpendicular to the line of gravity.

Preferably, the loading unit and/or receiving unit are adapted to positioning the X-ray photograph in the (un)treated stack such that one corner of the X-ray photograph, measured according to a line of gravity is lower than the other three corners.

Preferably the loading unit comprises a stop system for retaining a stack of X-ray photographs. Preferably, the stop system comprises a ribbed or staircase-shaped profile. Preferably, the stop system comprises a separation member that retains the stack of X-ray photographs at a top plane.

Preferably the device comprises a concave connection piece between the scanning device and the receiving unit for reversing the X-ray photographs. Preferably, the concave connecting piece comprises an end in the form of a plane with a slope of at least 10° with reference to a plane perpendicular to the line of gravity.

Preferably, the loading unit comprises a barcode reader. Preferably, the device is adapted to remove a abutment guide from the scanning unit when the barcode reader identifies a barcode.

Preferably, the loading unit comprises a displaceable loader configured to support a stack of X-ray photographs. Preferably, the stack is held against the loader by a separation member. Preferably, the loading unit is provided with a side wall.

Preferably, the equipment comprises a grabber mechanism provided with suction cups for arranging individual photographs onto a sliding plate. Preferably a device for blowing air under the sliding plate is provided in order to move the photographs towards the scanning device.

Preferably, the scanning device comprises a transparent plate, a stop member (blocking member), a light box and a scanner head.

Preferably, the device for automatically digitizing X-ray photographs is comprised of a frame on which a loader, a side wall, a grabber mechanism, a light box, a scanner head and a receiving area may be assembled. Preferably, the frame comprises adjustable supports.

### Description of the figures

FIG. 1 shows the entire assembly.

FIG. 2 shows the loading unit with the following component parts: 1. loader, 2. guide, 3. stop system, 4. sidewall, 5. untreated stack of X-ray photographs, 6. grabber mechanism, 7. suction cups, 8. separation member.

FIG. 3 shows the scanning device (digitization device) with the following components: 9. X-ray photographs, 10. sliding table, 11. sliding plate, 12. air displacement unit, 13. light box, 14. high resolution scanner head, 15. blocking member, 115. abutment.

FIG. 4 shows the receiving area with the following components: 16. concave connector, 17. closed sidewall, 18. receiving box, 19 treated stack of X-ray photographs.

FIG. 5 shows the entire device and indicates the operating angles.

### Detailed description of the invention

The present invention relates to a method and device for automatically digitizing X-ray photographs which were created in a conventional way. The method involves a sequence of steps that lead to automatic digitization. A first step consists of picking an individual X-ray photograph from a stack. The problem here is mainly formed by the adhesion that exists between the individual photographs. Subsequently, the photograph so collected is positioned on a scanning device. Through a displacement mechanism and under the influence of gravity the photograph is positioned at a location in order to achieve correct scanning. Finally, the photograph is placed on a treated stack. Preferably the photograph retains its place in the original order.

The device comprises essentially a loading unit, a scanner and a receiving space. The device is arranged in such a way that the X-ray photograph from the loading unit is placed correctly on the scanner. This is achieved through positioning a table at a determined angle. After the scanning, the photograph arrives in the receiving space where preferably it assumes its correct chronological order in the stack, for example by submitting the photograph to a reversing movement.

The terms "inclined" and "slanted", as used for describing the present invention, refer to a setup where an angle is formed with a plane perpendicular to the line of gravity, which angle is larger than 0° and less than 90°.

Where an angle is defined in relation to a line or a plane, the angle refers to the smallest angle formed with said line or plane.

Preferred embodiments are set out in detail in the following with the aid of the attached figures.

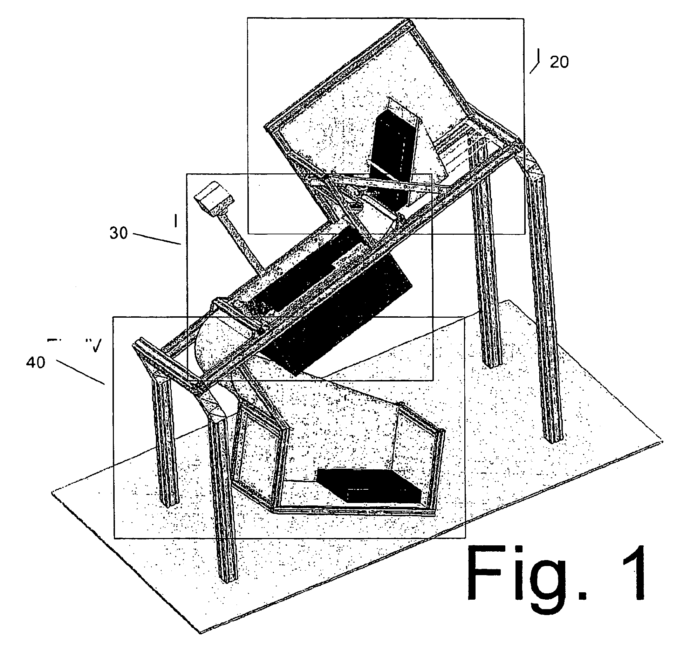

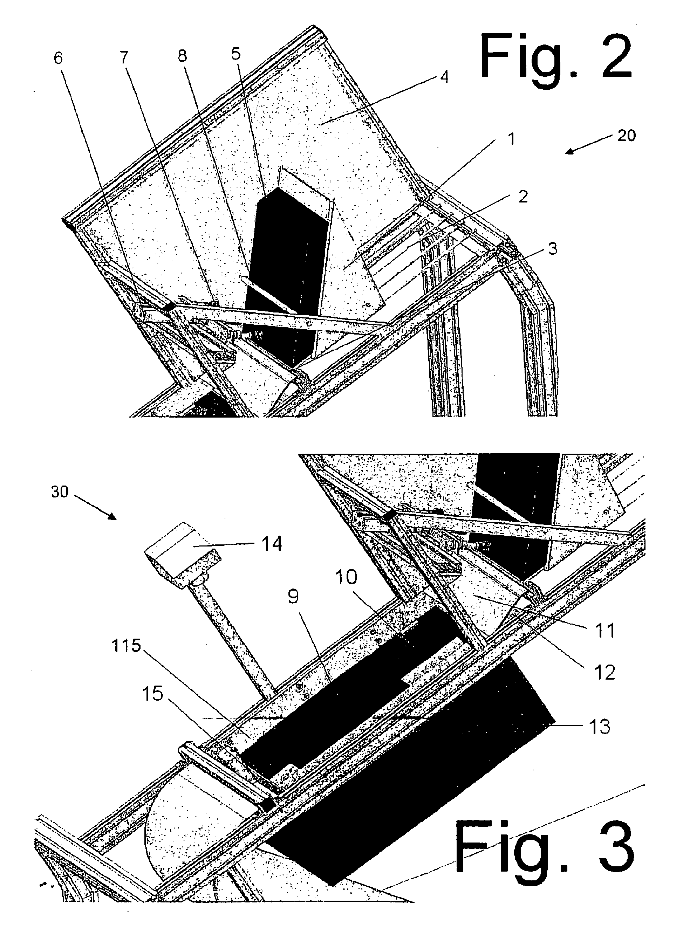

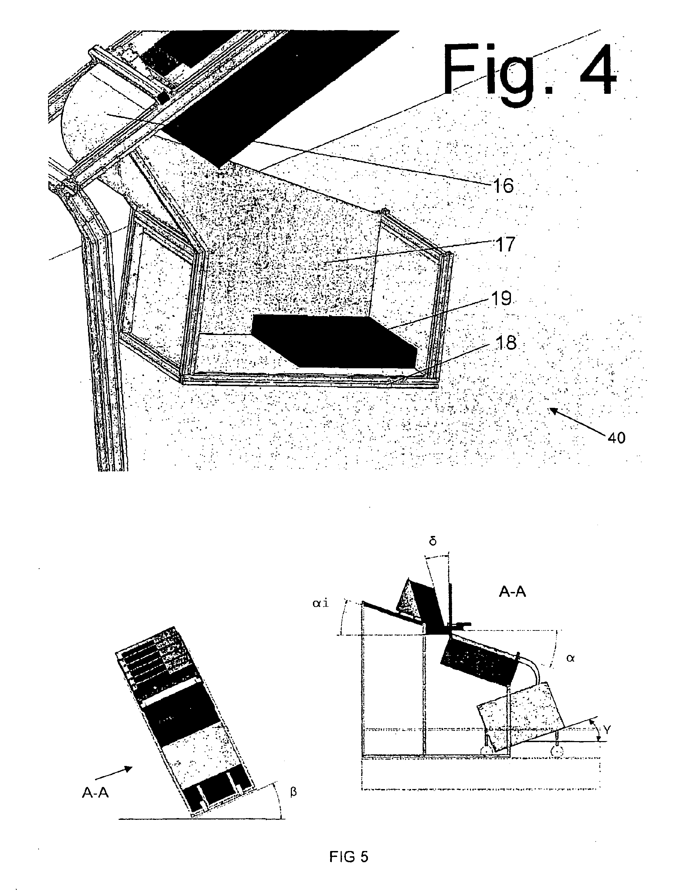

Figure 1 shows an embodiment of a device, which comprises three major entities: the loading unit 20 (Figure 2), the scanning device 30 (Figure 3) and the receiving space 40 (Figure 4). The whole comprises a frame in which the various components are modularly assembled into one entity. The complete frame is in its entirety laterally slanted about an angle β (Figure 5); this angle amounts to, preferably, between 10° and 50°, more preferably between 20° and 45° with reference to a plane perpendicular to the line of gravity.

The lateral direction of the frame refers to a direction which is essentially perpendicular to the direction of motion of an X-ray photograph from the untreated stack to the treated stack.

Figure 2 shows a detailed embodiment of the loading unit 20. The loading unit 20 is configured to comprise the untreated stack of photographs 5, which rests on the bottom of a supporting guide 2, which is positioned at an angle αᵢ (Figure 5). This angle is, preferably, between 10° and 50°, more preferably between 15° and 40° (relative to a plane perpendicular to the gravity line).

The untreated stack leans back against the loader 1, which can move longitudinally over the guide 2, and is slanted at an angle δ (Figure 5); this angle δ is preferably between 5° and 30°, more preferably between 10° and 25° with respect to the line of gravity.

Preferably, the loading unit 20 and in particular the loader 1 for the stack of photographs is arranged laterally slanted at an angle β, as defined above. In this way the loading unit 20, and in particular the loader 1 is configured to comprise a stack of photographs, whereby at least two edges of each photo, which depart from a common angle, are inclined relative to a plane perpendicular to the line of gravity, preferably inclined about the respective angles (90° - δ) and β, where δ and β are as defined above.

Preferably, a side wall 4 is provided on the loading unit 20 to support the stack sideways. The photographs are held in place at the front by a stop system 3.

The loading unit preferably comprises a grabbing mechanism 6.

The grabbing mechanism 6 is preferably provided with suction cups 7 with the aim of removing the photographs from the stack and then positioning them on the scanning device (table 10). To ensure that the grabbing mechanism displaces only one photograph per movement, in a preferred embodiment a separating member 8 is provided. The stop system 3 preferably comprises a ribbed or staircase-shaped profile. The ribbed or staircase-profile profile is provided at the base of the stack 5 and is preferably ascending and facing the stack of photographs.

Advantageously, devices according to the invention, do not include drums or rollers for transporting the X-ray photographs. This prevents vibration and inaccuracies in the movement and/or positioning of the photographs on the scanner 30.

To guide the photograph to the scanner (Figure 3), an air displacement unit 12 is preferably used which forms an air cushion on the sliding table 10. The air displacement unit 12 is a device that blows air over the sliding table 10 in a direction from the loading unit 20 to the receiving space 40. The sliding table 10 is slanted at an angle α (Figure 5); this angle is, preferably, at least 10°, more preferably at least 20° (relative to a plane perpendicular to the gravity line). The angle α is less than 90°, preferably less than 65°. The air displacement unit 12 is preferably arranged under a sliding plate 11 on which the grabbed photograph lands.

The photograph should be positioned in a predetermined position on the sliding table 10. This predetermined position is determined by two abutment guides on the sliding table 10. In a preferred embodiment the abutment guides consist of a blocking member 15 and an abutment 115. The two abutment guides together form an angle on the sliding table 10. The two abutment guides are arranged slanted relative to a plane perpendicular to the gravity line.

Due to the slope of the table 10, preferably strengthened by the combination with the air cushions, the photograph is displaced to the predetermined position on the scanner 30. The photograph touches with two edges against the two abutment guides 15 and 115. The abutment guides are oriented such that the angle of the photograph enclosed by the abutment guides is located lower than the other three corners when measured along the line of gravity. In other words at least two edges of the photo that come from the same corner are arranged slanted with respect to the plane perpendicular to the gravity line, preferably at the respective angles α and β, with α and β as defined above.

The sliding table 10 preferably comprises a transparent surface on which the photograph slides up to and against the blocking member 15. This transparent surface is preferably made from glass. In one possible variant the scanner also includes a light box 13 placed under the transparent surface and a high resolution scanning head 14.

The digitizing of an X-ray photograph is preferably performed by taking an "instant" exposure of the photograph with the scanner head 14. During the digitization the photograph is preferably fully supported (over the entire area of the photo) by the table 10.

Preferably, the blocking member 15 comprises an actuator to remove the blocking member 15 and release the photograph allowing it to move to the receiving space.

According to a preferred embodiment, a concave connecting piece 16 is provided downstream from the blocking member 15 at the end of the sliding table 10, that leads along a sloping plane into the receiving box 18. The angle Y of this slope (Figure 5) is preferably at least 10°, more preferably at least 20° relative to a plane perpendicular to the gravity line.

The receiving space 40, and in particular the receiving box 18, is preferably arranged sloping with respect to a plane perpendicular to the gravity line. The angle of the slope is preferably at least 10°, more preferably at least 20° and smaller than 90° relative to a plane perpendicular to the gravity line. The receiving space 40, and in particular the receiving box 18 are arranged (oriented) in such a way that a photograph from the treated stack in the receiving box (receiving space) comprises at least two edges extending from a common corner, which are arranged sloping with respect to a plane perpendicular to the gravity line, preferably at the respective angles β and γ, as defined above.

The device preferably further comprises a computer with archiving software for storing the digitized photographs. The computer may be connected to a network for sending the digitized photographs over the network to a database or to a physician.

The operation of the embodiments of the device which are disclosed here above will be explained further below. A first step comprises picking up an individual X-ray photograph 9 from the unprocessed stack 5.

The top X-ray photograph on the unprocessed stack 5 in the loading unit 20 is preferably sucked by the suction cups 7 of the grabber mechanism 6. The separation member 8 and the ribbed or staircase-shaped form of the stop system 3 can advantageously ensure that only one photograph is taken. When the grabber mechanism (the suction cups 7) takes the top photograph from the untreated stack, the separation member 8 and the profile 3 retain temporarily the photograph and the photo is drawn convexly by the grabber mechanism 6, between the separating member and the staircase-shaped profile. This ensures that only one photograph is taken. The staircase-shaped or ribbed profile 3 ensures by its specific design that only one photograph is taken at a time.

Since the stack in the loading unit becomes smaller, the movable loader 1 moves together with the unprocessed stack 5 along the guide 2 up to and against the stop system 3.

A next step comprises the positioning of the X-ray photograph 9 on the scanning device 30. In case the photograph is picked up by the suction cups, the photograph drops after stopping the suction force and lands via a sliding plate 11 on the sliding table 10. Due to the slope of the sliding table 10 the X-ray photograph 9 slides up to and against the blocking member 15 and abutment 115. The sliding is preferably assisted by the provision of an air cushion by means of the air displacement unit 12.

After positioning, the photographis located in a predetermined position on the light box 13, where the photograph is subsequently scanned by means of the high resolution scanning head 14.

A further step includes placing the X-ray photograph on the processed stack 19. Since the sliding table 10 is arranged at an angle α, and preferably because of the action of the air cushion, the photograph slides further down when the blocking member 15 is removed.

A concave connecting piece 16 is preferably provided at the end of the sliding table 10, so as to ensure that the photo undergoes a semi-circular motion and thus ends in the receiving box 18 turned over. This connecting piece is preferably a folded plate. This last action ensures that the photographs are back in their original order.

In a possible embodiment the loading unit additionally comprises a barcode reader to facilitate digitizing of patient-related photographs. Photographs of a same patient are grouped in the unprocessed stack and are separated by a separating page. The separating page comprises a barcode that identifies the patient. When the barcode reader has identified a barcode, the front page is grasped by the grabber mechanism 6 and moved to the scanner. The blocking mechanism is removed and the front page slides directly towards the receiving space without being scanned.

## Claims

1. A method for the automatic digitization of X-ray photographs comprising the following steps:
picking an individual X-ray photograph (9) from an unprocessed stack (5), positioning the X-ray photograph on a scanning device (30) in a predetermined position, digitizing the X-ray photograph in the predetermined position and placing the X-ray photograph on a processed stack (19), wherein the influence of gravity is used in the step of positioning the X-ray photograph (9) on the scanning device (30), **characterised in that** in positioning the X-ray photograph on the scanning device, the X-ray photograph slides on a sliding table (10) that has a slope of at least 10° with reference to a plane perpendicular to the line of gravity but is not parallel to the line of gravity and so that two edges of the X-ray photograph (9), which run from a common corner, are inclined relative to a plane perpendicular to the gravity line, the X-ray photograph sliding up to and against two abutment guides (15, 115) for the two edges of the X-ray photograph (9), which run from the common corner, thereby arriving at the predetermined position, wherein the two abutment guides (15, 115) together form an angle so that they enclose said corner of the X-ray photograph, the abutment guides (15, 115) being oriented inclined relative to a plane perpendicular to the gravity line on the sliding table so that, in the predetermined position of the X-ray photograph, the enclosed corner is located lower than the other three corners when measured along the gravity line.

2. Method for automatic digitization of X-ray photographs according to claim 1, wherein during the
step of positioning the X-ray photograph on the scanning device air is blown under the X-ray photograph.

3. Method for automatic digitization of X-ray photographs according to any one of the preceding claims, wherein the step of placing the X-ray photograph on the processed stack comprises reversing the X-ray photograph, so that in the processed stack the X-ray photograph assumes the same position as the original position of the X-ray photograph in the unprocessed stack.

4. Method for automatic digitization of X-ray photographs according to any one of the preceding claims, wherein in the step of picking the X-ray photograph from the unprocessed stack the uppermost X-ray photograph of the unprocessed stack is always taken.

5. Device for automatic digitization of X-ray photographs comprising a loading unit (20), a scanning device (30) and a receiving space (40), wherein an X-ray photograph (9) is arranged to flow from the loading unit to the scanning device and subsequently to the receiving space, **characterized in that**:
- the scanning device (30) comprises a sliding table (10) on which the X-ray photograph (9) is arranged to slide to a predetermined position for digitization, the sliding table (10) being arranged inclined at an angle of at least 10° with reference to a plane perpendicular to the line of gravity but not parallel to the line of gravity,
- the loading unit (20), the scanning device (30) and the receiving space (40) are laterally inclined so that, in use, two edges of the X-ray photograph (9), which run from a common corner, are inclined relative to a plane perpendicular to the gravity line and
- the scanning device (30) comprises two abutment guides (15, 115) for the two edges of the X-ray photograph which run from the common corner, wherein the two abutment guides (15, 115) together form an angle on the sliding table (10) so as to enclose the corner of the X-ray photograph (9) and are inclined with reference to a plane perpendicular to the line of gravity,
such that, in use, the X-ray photograph (9) slides on the sliding table (10) to touch with said two edges against the two abutment guides (15, 115) so that the corner enclosed by the abutment guides (15, 115) is located lower than the other three corners when measured along the gravity line.

6. The device for automatic digitization of X-ray photographs according to claim 5, further comprising a device (12) for blowing air over said plane for positioning the X-ray photograph.

7. The device for automatic digitization of X-ray photographs according to claim 5 or 6, wherein the loading unit and/or the receiving space are arranged inclined at an angle of at least 10° with reference to a plane perpendicular to the line of gravity.

8. The device for automatic digitization of X-ray photographs according to claim 7, wherein the loading unit and/or the receiving space are adapted so as to position the X-ray photograph such that one corner of the X-ray photograph, measured according to the line of gravity is located lower than the other three corners.

9. The device for automatic digitization of X-ray photographs according to any one of claims 5 to 8, wherein the loading unit comprises a stop system (3, 8) for retaining a stack of X-ray photographs.

10. The device for automatic digitization of X-ray photographs according to claim 9, wherein the stop system comprises a ribbed or staircase-shaped profile (3).

11. The device for automatic digitization of X-ray photographs according to claim 9 or 10, wherein the stop system comprises a separation member (8) for retaining a stack of X-ray photographs at a top plane.

12. The device for automatic digitization of X-ray photographs according to any one of claims 5 to 11, comprising a concave connecting piece (16) between the scanning device and the receiving space for reversing the X-ray photograph.

13. The device for automatic digitization of X-ray photographs according to claim 12, wherein the concave connecting piece comprises an end in the form of a plane with a slope of at least 10° with reference to a plane perpendicular to the line of gravity.

14. The device for automatic digitization of X-ray photographs according to any one of claims 5 to 13, wherein the loading unit comprises a barcode reader.

15. The device for automatic digitization of X-ray photographs according to claim 14, adapted for withdrawing an abutment guide of the scanning device when the barcode reader reads a barcode.

## Patentansprüche

1. Verfahren zur automatischen Digitalisierung von Röntgenaufnahmen, das folgende Schritte umfasst: Nehmen einer einzelnen Röntgenaufnahme (9) von einem unbearbeiteten Stapel (5), Positionieren der Röntgenaufnahme auf einer Scanvorrichtung (30) in einer festgelegten Position, Digitalisieren der Röntgenaufnahme in der festgelegten Position und Platzieren der Röntgenaufnahme auf einem bearbeiteten Stapel (19), wobei der Einfluss der Schwerkraft bei dem Schritt des Positionierens der Röntgenaufnahme (9) auf der Scanvorrichtung (30) genutzt wird, **dadurch gekennzeichnet, dass** beim Positionieren der Röntgenaufnahme auf der Scanvorrichtung die Röntgenaufnahme auf einem Gleittisch (10) gleitet, der eine Neigung von mindestens 10° bezogen auf eine Ebene senkrecht zur Schwerpunktlinie aufweist, jedoch nicht parallel zur Schwerpunktlinie verläuft, und sodass zwei Kanten der Röntgenaufnahme (9), die von einer gemeinsamen Ecke aus verlaufen, relativ zu einer Ebene senkrecht zur Schwerpunktlinie geneigt sind, wobei die Röntgenaufnahme bis zu und gegen zwei Anschlagführungen (15, 115) für die zwei Kanten der Röntgenaufnahme (9), die von der gemeinsamen Ecke aus verlaufen, gleitet, wodurch sie die festgelegte Position erreicht, wobei die zwei Anschlagführungen (15, 115) gemeinsam einen Winkel bilden, sodass sie die Ecke der Röntgenaufnahme umschließen, wobei die Anschlagführungen (15, 115) relativ zu einer Ebene senkrecht zur Schwerpunktlinie auf dem Gleittisch geneigt ausgerichtet sind, sodass, in der festgelegten Position der Röntgenaufnahme, die eingeschlossene Ecke tiefer liegt als die anderen drei Ecken, wenn entlang der Schwerpunktlinie gemessen wird.

2. Verfahren zur automatischen Digitalisierung von Röntgenaufnahmen nach Anspruch 1, wobei während des Schritts des Positionierens der Röntgenaufnahme auf der Scanvorrichtung Luft unter die Röntgenaufnahme geblasen wird.

3. Verfahren zur automatischen Digitalisierung von Röntgenaufnahmen nach einem der vorhergehenden Ansprüche, wobei der Schritt des Platzierens der Röntgenaufnahme auf dem bearbeiteten Stapel das Umdrehen der Röntgenaufnahme umfasst, sodass die Röntgenaufnahme in dem bearbeiteten Stapel dieselbe Position einnimmt wie die ursprüngliche Position der Röntgenaufnahme in dem unbearbeiteten Stapel.

4. Verfahren zur automatischen Digitalisierung von Röntgenaufnahmen nach einem der vorhergehenden Ansprüche, wobei bei dem Schritt des Nehmens der Röntgenaufnahme von dem unbearbeiteten Stapel stets die oberste Röntgenaufnahme von dem unbearbeiteten Stapel genommen wird.

5. Vorrichtung zur automatischen Digitalisierung von Röntgenaufnahmen, umfassend eine Bestückungseinheit (20), eine Scanvorrichtung (30) und einen Aufnahmeraum (40), wobei eine Röntgenaufnahme (9) angeordnet ist, sich von der Bestückungseinheit zu der Scanvorrichtung und anschließend zum Aufnahmeraum zu bewegen, **dadurch gekennzeichnet, dass**:
- die Scanvorrichtung (30) einen Gleittisch (10) umfasst, auf dem die Röntgenaufnahme (9) angeordnet ist, in eine festgelegte Position zur Digitalisierung zu gleiten, wobei der Gleittisch (10) unter einem Winkel von mindestens 10° bezogen auf eine Ebene senkrecht zur Schwerpunktlinie, jedoch nicht parallel zur Schwerpunktlinie, geneigt angeordnet ist,
- die Bestückungseinheit (20), die Scanvorrichtung (30) und der Aufnahmeraum (40) seitlich geneigt sind, sodass während des Gebrauchs zwei Kanten der Röntgenaufnahme (9), die von einer gemeinsamen Ecke aus verlaufen, relativ zu einer Ebene senkrecht zur Schwerpunktlinie geneigt sind, und
- die Scanvorrichtung (30) zwei Anschlagführungen (15, 115) für die zwei Kanten der Röntgenaufnahme, die von der gemeinsamen Ecke aus verlaufen, umfasst, wobei die zwei Anschlagführungen (15, 115) gemeinsam einen Winkel auf dem Gleittisch (10) bilden, um die Ecke der Röntgenaufnahme (9) zu umschließen, und bezogen auf eine Ebene senkrecht zur Schwerpunktlinie geneigt sind,
sodass die Röntgenaufnahme (9) während des Gebrauchs auf dem Gleittisch (10) gleitet, um mit den beiden Kanten die zwei Anschlagführungen (15, 115) zu berühren, sodass die Ecke, die von den Anschlagführungen (15, 115) umschlossen ist, tiefer liegt als die anderen drei Ecken, wenn entlang der Schwerpunktlinie gemessen wird.

6. Vorrichtung zur automatischen Digitalisierung von Röntgenaufnahmen nach Anspruch 5, ferner umfassend eine Vorrichtung (12) zum Blasen von Luft über die Ebene zum Positionieren der Röntgenaufnahme.

7. Vorrichtung zur automatischen Digitalisierung von Röntgenaufnahmen nach Anspruch 5 oder 6, wobei die Bestückungseinheit und/oder der Aufnahmeraum unter einem Winkel von mindestens 10° bezogen auf eine Ebene senkrecht zur Schwerpunktlinie geneigt angeordnet ist bzw. sind.

8. Vorrichtung zur automatischen Digitalisierung von Röntgenaufnahmen nach Anspruch 7, wobei die Bestückungseinheit und/oder der Aufnahmeraum angepasst ist bzw. sind, die Röntgenaufnahme so zu positionieren, dass eine Ecke der Röntgenaufnahme, entlang der Schwerpunktlinie gemessen, tiefer liegt als die anderen drei Ecken.

9. Vorrichtung zur automatischen Digitalisierung von Röntgenaufnahmen nach einem der Ansprüche 5 bis 8, wobei die Bestückungseinheit ein Arretierungssystem (3, 8) zum Festhalten eines Stapels von Röntgenaufnahmen umfasst.

10. Vorrichtung zur automatischen Digitalisierung von Röntgenaufnahmen nach Anspruch 9, wobei das Arretierungssystem ein geripptes oder treppenstufenförmiges Profil (3) aufweist.

11. Vorrichtung zur automatischen Digitalisierung von Röntgenaufnahmen nach Anspruch 9 oder 10, wobei das Arretierungssystem ein Trennelement (8) zum Festhalten eines Stapels von Röntgenaufnahmen in einer oberen Ebene umfasst.

12. Vorrichtung zur automatischen Digitalisierung von Röntgenaufnahmen nach einem der Ansprüche 5 bis 11, die ein konkaves Verbindungsstück (16) zwischen der Scanvorrichtung und dem Aufnahmeraum zum Umdrehen der Röntgenaufnahme umfasst.

13. Vorrichtung zur automatischen Digitalisierung von Röntgenaufnahmen nach Anspruch 12, wobei das konkave Verbindungsstück ein Ende in Form einer Ebene mit einer Neigung von mindestens 10 ° bezogen auf eine Ebene senkrecht zur Schwerpunktlinie umfasst.

14. Vorrichtung zur automatischen Digitalisierung von Röntgenaufnahmen nach einem der Ansprüche 5 bis 13, wobei die Bestückungseinheit einen Strichcodeleser umfasst.

15. Vorrichtung zur automatischen Digitalisierung von Röntgenaufnahmen nach Anspruch 14, angepasst zum Zurückziehen einer Anschlagführung der Scanvorrichtung, wenn der Strichcodeleser einen Strichcode liest.

## Revendications

1. Procédé pour la numérisation automatique de photographies par rayons X comprenant les étapes consistant à :
prendre une photographie par rayons X (9) individuelle dans une pile non traitée (5), positionner la photographie par rayons X sur un dispositif de balayage (30) dans une position prédéterminée, numériser la photographie par rayons X dans la position prédéterminée et placer la photographie par rayons X sur une pile traitée (19), l'influence de la gravité étant utilisée dans l'étape consistant à positionner la photographie par rayons X (9) sur le dispositif de balayage (30), **caractérisé en ce que**, lors du positionnement de la photographie par rayons X sur le dispositif de balayage, la photographie par rayons X glisse sur une table de glissement (10) présentant une pente d'au moins 10° par rapport à un plan perpendiculaire à la ligne de gravité mais qui n'est pas parallèle à la ligne de gravité et de sorte que deux bords de la photographie par rayons X (9), qui s'étendent depuis un coin commun, sont inclinés par rapport à un plan perpendiculaire à la ligne de gravité, la photographie par rayons X glissant jusqu'à et contre deux guides de butée (15, 115) pour les deux bords de la photographie par rayons X (9), qui s'étendent depuis le coin commun, arrivant ainsi à la position prédéterminée, les deux guides de butée (15, 115) formant ensemble un angle de sorte qu'ils enferment ledit coin de la photographie par rayons X, les guides de butée (15, 115) étant orientés de façon inclinée par rapport à un plan perpendiculaire à la ligne de gravité sur la table de glissement de sorte que, dans la position prédéterminée de la photographie par rayons X, le coin enfermé est situé plus bas que les trois autres coins quand on mesure le long de la ligne de gravité.

2. Procédé pour la numérisation automatique de photographies par rayons X selon la revendication 1, dans lequel pendant l'étape consistant à positionner la photographie par rayons X sur le dispositif de balayage, de l'air est soufflé sous la photographie par rayons X.

3. Procédé pour la numérisation automatique de photographies par rayons X selon l'une quelconque des revendications précédentes, dans lequel l'étape consistant à placer la photographie par rayons X sur la pile traitée comprend le retournement de la photographie par rayons X, de sorte que dans la pile traitée, la photographie par rayons X prend la même position que la position originale de la photographie par rayons X dans la pile non traitée.

4. Procédé pour la numérisation automatique de photographies par rayons X selon l'une quelconque des revendications précédentes, dans lequel dans l'étape consistant à prendre la photographie par rayons X dans la pile non traitée, la photographie par rayons X la plus en haut de la pile non traitée est toujours prise.

5. Dispositif pour la numérisation automatique de photographies par rayons X comprenant une unité de chargement (20), un dispositif de balayage (30) et un espace de réception (40), dans lequel une photographie par rayons X (9) est agencée pour circuler de l'unité de chargement au dispositif de balayage et ensuite à l'espace de réception, **caractérisé en ce que** :
- le dispositif de balayage (30) comprend une table de glissement (10) sur laquelle la photographie par rayons X (9) est agencée pour glisser dans une position prédéterminée pour la numérisation, la table de glissement (10) étant agencée de façon inclinée à un angle d'au moins 10° par rapport à un plan perpendiculaire à la ligne de gravité mais non parallèle à la ligne de gravité,
- l'unité de chargement (20), le dispositif de balayage (30) et l'espace de réception (40) sont inclinés latéralement de sorte que, en fonctionnement, deux bords de la photographie par rayons X (9), qui s'étendent depuis un coin commun, sont inclinés par rapport à un plan perpendiculaire à la ligne de gravité et
- le dispositif de balayage (30) comprend deux guides de butée (15, 115) pour les deux bords de la photographie par rayons X qui s'étendent depuis le coin commun, les deux guides de butée (15, 115) formant ensemble un angle sur la table de glissement (10) de façon à enfermer le coin de la photographie par rayons X (9) et étant inclinés par rapport à un plan perpendiculaire à la ligne de gravité,
de sorte que, en fonctionnement, la photographie par rayons X (9) glisse sur la table de glissement (10) pour venir en contact avec lesdits deux bords contre les deux guides de butée (15, 115) de sorte que le coin enfermé par les guides de butée (15, 115) est situé plus bas que les trois autres coins quand on mesure le long de la ligne de gravité.

6. Dispositif pour la numérisation automatique de photographies par rayons X selon la revendication 5, comprenant en outre un dispositif (12) pour souffler de l'air sur ledit plan pour positionner la photographie par rayons X.

7. Dispositif pour la numérisation automatique de photographies par rayons X selon la revendication 5 ou 6, dans lequel l'unité de chargement et/ou l'espace de réception sont agencés de façon inclinée à un angle d'au moins 10° par rapport à un plan perpendiculaire à la ligne de gravité.

8. Dispositif pour la numérisation automatique de photographies par rayons X selon la revendication 7, dans lequel l'unité de chargement et/ou l'espace de réception sont adaptés de façon à positionner la photographie par rayons X de sorte qu'un coin de la photographie par rayons X, mesuré selon la ligne de gravité, est situé plus bas que les trois autres coins.

9. Dispositif pour la numérisation automatique de photographies par rayons X selon l'une quelconque des revendications 5 à 8, dans lequel l'unité de chargement comprend un système d'arrêt (3, 8) pour retenir une pile de photographies par rayons X.

10. Dispositif pour la numérisation automatique de photographies par rayons X selon la revendication 9, dans lequel le système d'arrêt comprend un profil (3) strié ou en forme d'escalier.

11. Dispositif pour la numérisation automatique de photographies par rayons X selon la revendication 9 ou 10, dans lequel le système d'arrêt comprend un élément de séparation (8) pour retenir une pile de photographies par rayons X au niveau d'un plan supérieur.

12. Dispositif pour la numérisation automatique de photographies par rayons X selon l'une quelconque des revendications 5 à 11, comprenant une pièce de connexion (16) concave entre le dispositif de balayage et l'espace de réception pour retourner la photographie par rayons X.

13. Dispositif pour la numérisation automatique de photographies par rayons X selon la revendication 12, dans lequel la pièce de connexion concave comprend une extrémité sous forme d'un plan avec une pente d'au moins 10° par rapport à un plan perpendiculaire à la ligne de gravité.

14. Dispositif pour la numérisation automatique de photographies par rayons X selon l'une quelconque des revendications 5 à 13, dans lequel l'unité de chargement comprend un lecteur de code-barres.

15. Dispositif pour la numérisation automatique de photographies par rayons X selon la revendication 14, adapté pour retirer un guide de butée du dispositif de balayage quand le lecteur de code-barres lit un code-barres.
